Europäisches Patentamt

European Patent Office

Office européen des brevets

(19)

(11) Veröffentlichungsnummer: **0 262 387 B1**

## (12) EUROPÄISCHE PATENTSCHRIFT

(45) Veröffentlichungstag der Patentschrift: **23.12.92**

(21) Anmeldenummer: **87112314.7**

(22) Anmeldetag: **25.08.87**

(51) Int. Cl.5: **C08G 12/12**, C08G 12/32, C08G 14/06, C09J 161/34

(54) Verfahren zur Herstellung von lagerstabilen, flüssigen Harnstoff-Formaldehyd-Leimharzen.

(30) Priorität: **30.08.86 DE 3629602**

(43) Veröffentlichungstag der Anmeldung:
**06.04.88 Patentblatt 88/14**

(45) Bekanntmachung des Hinweises auf die
Patenterteilung:
**23.12.92 Patentblatt 92/52**

(84) Benannte Vertragsstaaten:
**AT BE DE FR IT LU NL**

(56) Entgegenhaltungen:
**DD-A- 228 273**

**PATENT ABSTRACTS OF JAPAN, Band 7, Nr. 61 (C-156)[1206], 15 März 1983; & JP-A-57 207 615 (MATSUSHITA DENKO K.K.) 20-12-1982**

(73) Patentinhaber: **BASF Aktiengesellschaft
Carl-Bosch-Strasse 38
W-6700 Ludwigshafen(DE)**

(72) Erfinder: **Weber, Engelbert
Neubergstrasse 45
W-6730 Neustadt(DE)**
Erfinder: **Diem, Hans, Dr.
Kniebisstrasse 16
W-6800 Mannheim 1(DE)**
Erfinder: **Muehlthaler, Wolfgang
Regerstrasse 13
W-6944 Hemsbach(DE)**
Erfinder: **Matthias, Guenther, Dr.
Meergartenweg 25a
W-6710 Frankenthal(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft ein Verfahren zur Herstellung von lagerstabilen, flüssigen Harnstoff-Formaldehyd-Leimharzen mit einem Molverhältnis Harnstoff : Formaldehyd zwischen 1:0,8 und 1:2,1 und einem Trockengehalt von 58-75 Gew.-%, bezogen auf das Gesamtgewicht des Leimharzes. Bei diesem Verfahren wird in an sich bekannter Weise aus Formaldehyd und Harnstoff, sowie gegebenenfalls Melamin und/oder Phenol, wobei Melamin und Phenol auch in Form von Vorkondensaten mit Formaldehyd vorliegen können, eine Kondensatlösung hergestellt, dann unter vermindertem Druck, eingeengt und anschließend mit Harnstoff versetzt.

Die Herstellung von flüssigen Harnstoff-Formaldehyd-Leimharzen mit einem Molverhältnis von Harnstoff : Formaldehyd zwischen 1:1,0 und 1:2,1 ist bekannt und beispielsweise in der US-A-4 410 685 beschrieben. Bei der dort beschriebenen Arbeitsweise zur Herstellung der Leimharze kann man eine Kondensatlösung herstellen und anschließend unter vermindertem Druck einengen. Über die Art der Einengung der Kondensatlösung ist in der Druckschrift nichts ausgesagt, da dem bekannten Verfahren die Aufgabe zugrunde liegt, ein hydrolytisch stabiles Leimharz zu schaffen, d.h. ein Leimharz, welches eine geringere Formaldehyd-Emission aufweist. Andere Eigenschaften der Leimharze sind in der Druckschrift nicht angesprochen.

In der Literaturstelle A. Pizzi, Wood Adhesives, Marcel Dekker, Inc., Now York und Basel, 1983, Seiten 88 und 89, ist die Entfernung von überschüssigem Wasser unter Vakuum, beispielsweise bei 40°C, für Harnstoff-Formaldehyd-Kondensatlösungen beschrieben, welche beispielsweise ein Molverhältnis von Harnstoff : Formaldehyd von 1:1,8 aufweisen. Hierbei wird beispielsweise unter Vakuum destilliert, wobei eine teilweise Fortsetzung der Kondensationsreaktion stattfindet. Man kann gewünschtenfalls auch (vgl. Seite 94 der Literaturstelle) dem fertigen Leimharz noch freien Harnstoff zusetzen.

Über die Art der Vakuumdestillation ist nichts gesagt, zumal die Literaturstelle nur eine Übersicht über Holzklebstoffe im allgemeinen geben will.

Das Eindampfen von Kondensatlösungen nach dem Stand der Technik kann in verschiedener Weise erfolgen. So wird nach Ullmanns Enzyklopädie der technischen Chemie, 4. Auflage, Band 7, Seite 412 (1973) die Verwendung eines Röhrenverdampfers empfohlen. Nach der US-A-2 456 192, Spalte 3, Zeilen 42-55, kann man die Kondensatlösung einer Vakuumverdampfung in einem Entspannungsgefäß unter gleichzeitiger Kühlung durch die Verdampfung unterwerfen, wobei in diesen beiden Fällen die relativ lange Verweilzeit, je nach Füllungszustand, nachteilig ist, da hierdurch unkontrollierte Weiterkondensationsreaktionen des Leimharzes auftreten, was zu einer Verkürzung der Lagerfähigkeit führt.

Nach der DE-A-1 570 998 kann man Kondensatlösungen in einem nicht näher erläuterten Röhrenverdampfer unter Durchströmung der Rohre von unten nach oben, beispielsweise von 47 auf 66 %, eindampfen.

Nach der US-A-2 729 616 kann man die Kondensatlösung durch eine im Reaktor angeordnete Heizspirale erwärmen und auf diese Weise konzentrieren. Die Druckschrift stellt jedoch fest (vgl. Spalte 3, Zeile 65 bis Spalte 4, Zeile 3), daß Harz auskristallisiert und die Rohrwandungen bedeckt, so daß eine periodische Reinigung erforderlich ist. Zur Lösung des Problems wird vorgeschlagen, die Heizspirale als gerades Rohr auszubilden, wozu die Reaktoreinheit entsprechend verlängert werden muß. Doch auch in diesem Falle werden Messer zum Abschälen von Ablagerungen an der Rohrwandung empfohlen, woraus der Schluß zu ziehen ist, daß auch bei dieser Arbeitsweise Ablagerungen unvermeidbar sind.

Die Bildung von Ablagerungen tritt bei sämtlichen der zuvor genannten Eindampfmethoden und -vorrichtungen ein. Sie könnten nur dann zufriedenstellend arbeiten, wenn es möglich wäre, eine relativ kleine Verweilzeit zu erzielen und wenn die Anlage fortwährend in Betrieb gehalten würde. Bei Unterbrechung des Durchsatzes, aber auch schon aufgrund der relativ langen Verweilzeit von Anteilen des jeweiligen Leimansatzes bilden sich unlösliche Niederschläge, die Harze werden hochviskos (über 4000 mPa.s, gemessen bei 20°C) und können mit den üblichen Förderapparaturen nicht mehr gepumpt oder verarbeitet werden. Außerdem wird die Gelierzeit verlängert, wodurch die Harze wenig reaktiv sind und bei Verwendung des Harzes zur Spanplattenherstellung diese mehr Zeit erfordert. Da überdies der Methylolgruppengehalt abfällt, vernetzen die Harze schlechter und die daraus gefertigten Spanplatten weisen höhere Quellwerte und niedrigere Festigkeiten auf.

Dadurch, daß die Verdampfer nach kurzer Laufzeit immer wieder gereinigt werden müssen, wird die Anlagekapazität verringert.

Fallfilmverdampfer sind in der Literatur beschrieben, vgl. "Verdampfen in Theorie und Praxis", Verlag Sauerländer, Aarau und Frankfurt am Main, Seiten 17, 170, 180 und 188 (1977). Diese werden typischerweise in der Milchindustrie, zur Eindickung von Fruchtsäften, zur Herstellung organischer Naturprodukte, wie z.B. Leim, Gerbeextrakt, usw., sowie zur Aufkonzentrierung von Glykol und Glycerin empfohlen. Zwar ist in der vorstehenden Aufzählung auch Leim erwähnt, als solcher aber als organisches Naturprodukt qualifiziert,

EP 0 262 387 B1

d.h. ein Produkt, das ohne wesentliche Veränderung seiner Konstitution erwärmt werden kann. Nicht gemeint sind damit Harnstoff-Formaldehyd-Leimharze, von denen bekannt ist, daß sie unter Wärmeeinwirkung immer weiter reagieren, wobei man mit der Bildung von unlöslichen Polymerisaten bzw. Polykondensaten rechnen muß. Vor dem Einsatz organischer Produkte in den Fallfilmverdampfern wird im übrigen ausdrücklich gewarnt (Seite 188 der Literaturstelle), so daß nach dieser Lehre die Anwendung von Fallfilmverdampfern bei der Eindampfung von Harnstoff-Formaldehyd-Leimharzen ungeeignet erscheinen muß. Die Möglichkeit der Rezirkulation ist in der Druckschrift angesprochen, um das Teillastverhalten bei nicht sehr kritischen Produkten zu verbessern.

In der Literaturstelle "Grundlagen der Verfahrenstechnik für Ingenieure", VEB Deutscher Verlag für Grundstoffindustrie, Seite 203 (1981) wird bei der Besprechung der Filmverdampfung auf ein weiteres Problem hingewiesen, das darin besteht, daß die wandnahen Schichten besonders lange verweilen. Daraus muß man im Falle von Aminoharzen die Befürchtung ableiten, daß hier die Kondensation weiter geht, und man mit Mischungen aus hoch- und niedrigkondensierten Komponenten rechnen muß, was sich nachteilig auf die Lagerstabilität auswirkt.

Zur Eindampfung von Leimen und Gelatinen empfiehlt die Literaturstelle "Verdampfen, Kondensieren und Kühlen", M. Hirsch, Berlin 1931, Seite 322, eine sog. Vierkörper-Verdampferanlage, die überaus kompliziert aufgebaut und damit sehr kostspielig ist.

Die Verwendung von Kühlvorrichtungen bei der Herstellung von Leimharzen ist bekannt, so beispielsweise von Oberflächen- oder Entspannungskühlern, vgl. US-A-2 456 192, von Platten- oder Durchlaufkühlern, vgl. DE-C-1 241 612, oder auch von gekühlten Rührbehältern, vgl. DE-C-2 262 197. Es ist ferner bekannt, daß man nach Zugabe von Harnstofflösung zur Harzlösung rasch abkühlen soll, beispielsweise auf Temperaturen von unter 20°C, vgl. DE-C-3 046 033.

Der Erfindung liegt die Aufgabe zugrunde, ein Verfahren der eingangs genannten Art so auszugestalten, daß die Herstellung von Harnstoff-Formaldehyd-Leimharzen mit besonders geringer Formaldehydabspaltung möglich ist, welche lagerstabil sind, aber trotzdem bei guter Kaltklebrigkeit eine hohe Reaktivität (d.h. kurze Gelierzeit) aufweisen.

Diese Aufgabe wird gelöst mit einem Verfahren der eingangs genannten Art, das dadurch gekennzeichnet ist, daß man in einer Stufe A eine Kondensatlösung mit einem Trockengehalt von 38-55 Gew.-%, bezogen auf das Gesamtgewicht der Lösung, hergestellt und durch Dünnschichtverdampfung eindampft wobei man sie, gegebenenfalls unter Zusatz von wäßriger Harnstofflösung, auf einen Trockengehalt von 58-75 Gew.-% bringt, und wobei man von der erhaltenen Produktlösung 10-60 Gew.-% in die Dünnschichtverdampfung rückführt, und dann in einer Stufe B eine wäßrige Harnstofflösung zur Produktlösung gibt und 0,5 bis 5 Sekunden danach eine Entspannungsverdampfung durchführt.

Die Zeitspanne zwischen der Zugabe der Harnstofflösung zur Produktlösung und der Entspannungsverdampfung ist so kurz bemessen, daß eine chemische Reaktion des Harnstoffs in der Harnstofflösung mit dem Kondensat in wesentlichem Umfang nicht stattfindet. Nach einer bevorzugten Ausführungsform des erfindungsgemäßen Verfahrens führt man die Entspannungsverdampfung 1,8 bis 2,5 Sekunden nach der Zugabe der Harnstofflösung zur Produktlösung durch. Die Entspannungsverdampfung selbst dauert im allgemeinen etwa 0,5 bis 5, bevorzugt 2 bis 3 Minuten.

Besonders zweckmäßig wird in Stufe B die Entspannungsverdampfung unter Vakuum so durchgeführt, daß man eine Lösung des fertigen Leimharzes mit einem Trockengehalt von 60 bis 68 Gew.%, insbesondere von 66,5 bis 67 Gew.%, erhält. Die Entspannungsverdampfung erfolgt unter gleichzeitiger Abkühlung auf tiefere Temperaturen, insbesondere auf etwa 17 bis 24°C, beispielsweise auf Temperaturen unterhalb 22°C. Die Temperatur der der Entspannungsverdampfung zugeführten Kondensat-Harnstofflösung-Mischung liegt zweckmäßigerweise bei etwa 40 bis 80°C.

Nach einer weiteren bevorzugten Ausführungsform des Verfahrens führt man in Stufe A die Dünnschichtverdampfung mit Hilfe eines oder mehrerer in Stufen hintereinandergeschalteter oder parallelgeschalteter Fallfilmverdampfer durch. Hierbei ist besonders bevorzugt, in 2 oder 3 Stufen zu arbeiten und in jeder Stufe Produktlösung rückzuführen. Besonders zweckmäßig betreibt man den bzw. die Fallfilmverdampfer bei einer mittleren Filmdicke von etwa 1 bis 2 mm (bevorzugt ungefähr 1,5 mm) und einer mittleren Verweilzeit zwischen 1 und 10 Minuten. Die erforderliche Beheizung bei der Fallfilmverdampfung läßt sich besonders bevorzugt mit Dampf von 2 bis 6 bar durchführen. Dieser Dampf kann mit den Brüden der Eindampfung, besonders bei mehrstufigen Eindampfungsverfahren, gemischt werden, was zur besseren Wärmenutzung zweckmäßig ist.

Besonders zweckmäßig dampft man in Stufe A die Kondensatlösung bei einer Temperatur zwischen 48 und 100°C ein. Dabei ist die Eintrittstemperatur höher als die Ausgangstemperatur.

Nach einer weiteren bevorzugten Ausführungsform der Stufe A versetzt man den Rückführanteil der Produktlösung vor dem erneuten Eintritt in die Dünnschichtverdampfung mit einer wäßrigen Harnstofflö-

3

sung. Besonders zweckmäßig ist die wäßrige Harnstofflösung 60 bis 72 gew.%ig.

Man kann die Fallfilmverdampfung vorteilhaft bei einem Druck von 100 bis 1000, insbesondere 110 bis 800 mbar durchführen, bevorzugt ist der Bereich zwischen 110 und 300 mbar.

Besonders zweckmäßig setzt man in Stufe A für die Dünnschichtverdampfung eine Kondensatlösung mit einem Trockengehalt von 40 bis 50 Gew.-%, insbesondere 45 bis 50 Gew.-%, ein. Die nach dem Eindampfen und gegebenenfalls Zusatz der Harnstofflösung erhaltene, konzentrierte Lösung weist einen Trockengehalt von vorzugsweise 60 bis 68 Gew.-%, insbesondere von etwa 65 Gew.-%, auf.

Die Zugabe von Harnstoff bei der Herstellung von Aminoplastleimharzen ist im Stand der Technik bekannt. Man kann Harnstoff in einer oder mehreren Chargen zusetzen, wobei der zuletzt zugesetzte Harnstoff die Aufgabe hat, als solcher möglichst unumgesetzt in der Lösung zu verbleiben, damit vorhandener und bei der Weiterverarbeitung freiwerdender Formaldehyd abgefangen und chemisch gebunden werden kann, vgl. US-A-4 410 685. Durch Zugabe von Harnstoff zum fertigen Leimharz erhält man eine sehr geringe Formaldehydabspaltung beim Pressen der Spanplatte und aus der fertigen Spanplatte. Der Zusatz von festem Harnstoff hat den Nachteil, daß die Handhabung einen erhöhten Personaleinsatz, sowie eine mögliche Verbackung im Silo oder in den Säcken mit sich bringt. Außerdem ist fester Harnstoff teurer als Harnstofflösung. Vorteilhaft bei der Verwendung von festem Harnstoff ist hingegen, daß sich die Leimharzlösung beim Auflösen von selbst abkühlt, so daß man hier Kühlmedium einsparen kann.

Die Verwendung einer Harnstofflösung ist insofern vorteilhaft, als sie sich leicht mittels Pumpen und Rohrleitungen transportieren und mit Zählern dosieren läßt und billiger ist als fester Harnstoff. Erforderlich ist allerdings eine Temperatur von 80°C, um den Harnstoff bei einer Konzentration von 68 % in Lösung zu halten. Bei niedrigerer Temperatur kann man eine nur geringe Konzentration einhalten, wodurch höhere Eindampfenergie erforderlich wird.

Bevorzugt verwendet man in Stufe B eine 60 bis 72 gew.%ige Harnstofflosung.

Bei der erfindungsgemäßen Verfahrensweise lassen sich in Stufe B die vorstehenden Vorteile realisieren und die Nachteile vermeiden, indem man die Harnstofflösung in den beispielsweise auf 60 bis 68 %, insbesondere 65 % eingeengten Leimstrom einleitet bzw. mit ihm vermischt und dann 0,5 bis 5 Sekunden, insbesondere 0,5 bis 4 Sekunden, besonders vorteilhaft 1,8 bis 2,5 Sekunden, später die Entspannungsverdampfung durchführt. Bei der Zuführung der etwa 80°C heißen Harnstofflösung zu der z.B. etwa 50°C heißen Leimlösung stellt sich eine mittlere Temperatur ein. Wesentlich ist die enge zeitliche Folge von Harnstofflösungzugabe und nachfolgender Entspannungsverdampfung. Läßt man die Kondensat-Harnstofflösung-Mischung längere Zeit bei einer Temperatur von über 45°C, so setzt sich der Harnstoff mit dem freien Formaldehyd und mit einem Teil der Methylolgruppen des Kondensats um und liegt dann nicht mehr als freier Harnstoff vor. Erfindungsgemäß erfolgt die Entspannungsverdampfung besonders zweckmäßig bei 20 mbar auf Temperaturen im Bereich von etwa 17 bis 24 und insbesondere 20 bis 22°C. Zur Erzielung einer guten Vermischung von Harnstofflösung und Kondensat führt man das Gemisch vor der Entspannungsverdampfung durch einen Mischer oder sorgt auf andere Weise für eine gute Durchmischung. Wesentlich ist, daß die Verweilzeit bis zur Entspannungsverdampfung und Abkühlung nicht mehr als etwa 5 Sekunden beträgt.

Das Endprodukt weist einen Trockengehalt von 58 bis 75 Gew.-%, bezogen auf das Gesamtgewicht des Leimharzes, auf. Bevorzugt weist es 60 bis 68 Gew.-%, insbesondere ungefähr 66,5 Gew.-% Feststoffgehalt auf.

Der hier verwendete Begriff "Trockengehalt" oder "Feststoffgehalt" betrifft den nach dem Eindampfen einer entsprechenden Lösung verbliebenen Gehalt an Substanz (DIN 12 605).

Die nach dem erfindungsgemäßen Verfahren erhältlichen Leimharze weisen überraschend eine sehr hohe Lagerstabilität auf, d.h. die Viskosität steigt bei der Lagerung nur sehr langsam an. Darüber hinaus ist die Kaltklebrigkeit ausgezeichnet, d.h. im Falle der Herstellung von Spanplatten hält der Spänekuchen schon vor der Härtung gut zusammen. Überraschend ist auch die Reaktivität, d.h. die Gelierzeit ist besonders kurz. Das führt auch zu einer kurzen Preßzeit.

Die unter Verwendung des erfindungsgemäß hergestellten Leimharzes erhältlichen Spanplatten weisen hohe mechanische Festigkeiten, ausgedrückt durch die Querzugsfestigkeit, auf. Die Quellbeständigkeit ist gut; die Spanplatten weisen nach Wässerung eine geringe Volumenvergrößerung durch Quellung auf. Außerdem ist die Formaldehydabspaltung bei der Herstellung der Spanplatten und aus den fertigen Platten und Werkstoffen sehr gering.

Beim Einengungsvorgang wird die verdünnte Harzlösung auf eine höhere Konzentration gebracht, gleichzeitig erfolgt durch die erhöhte Temperatur eine weitere Reaktion. Das ist auch der Fall, wenn die Temperatur durch Arbeiten im Vakuum abgesenkt ist. Daher ist eine kurze Verweilzeit wichtig. Hierbei ist nicht eine kurze mittlere Verweilzeit gemeint, vielmehr sollte die Verweilzeit für jedes Molekül vergleichbar kurz sein. Anderenfalls würde die Lagerbarkeit des Leimharzes verkürzt werden. Die Tatsache, daß durch

4

Anwendung der Fallfilmverdampfung diese Forderung erfüllt wird und hierdurch lagerstabile Leimharze erzielt werden, die gleichzeitig eine hohe Reaktivität aufweisen, muß als überraschend bezeichnet werden. Das gilt insbesondere im Hinblick darauf, daß ein Teil der Produktlösung in die Fallfilmverdampfung rückgeführt wird, wodurch a priori mit sehr unterschiedlichen Verweilzeiten der einzelnen Moleküle gerechnet werden muß. Daß dennoch keine Abnahme der Lagerstabilität eintritt, war nicht vorherzusehen.

Die Kondensation von Formaldehyd und Harnstoff sowie gegebenenfalls Melamin und anderen Zusätzen erfolgt in an sich bekannter Weise. Derartige Arbeitsweisen, die zu Harnstoff-Formaldehyd-Leimharzen mit dem eingangs genannten Molverhältnis Harnstoff : Formaldehyd führen, sind im Stand der Technik beschrieben, vgl. beispielsweise außer den genannten DE-C-1 241 612 auch noch EP 62 389. Bekanntlich erhält man je nach Kondensationsbedingungen unterschiedliche Harze und Eigenschaften (vgl. D.Braun, Praktikum der makromolekularen organischen Chemie, 1971, S. 254, Dr. Alfred Hüthig-Verlag, Heidelberg, 2. Auflage). Eine besonders geeignete Harzlösung erhält man durch Umsetzung von Harnstoff und Formaldehyd unter an sich bekannten Bedingungen, wobei man den pH-Wert konstant bei 4 bis 5 hält. Diese Verfahrensweise ist an sich bekannt, vgl. DE-C-1 241 612, Spalte 3, Zeilen 8 bis 14, Beispiel 1, sowie Anspruch. Diese Fahrweise ist besonders bevorzugt, obgleich auch die anderen, üblichen und in der Literatur beschriebenen Verfahrensvarianten ebenfalls möglich sind und in den Rahmen des erfindungsgemäßen Verfahrens fallen.

Das Endmolverhältnis Harnstoff:Formaldehyd beträgt im Verfahrensprodukt 1:0,8 bis 1:2,1, insbesondere 1:1,0 bis 1:2,1. Besonders bevorzugt ist ein Molverhältnis Harnstoff : Formaldehyd zwischen 1:0,8 und 1:1,3 bzw. 1:1,0 und 1:1,22. Die gegebenenfalls mitverwendete Menge an Melamin beträgt insbesondere 2 bis 16, bevorzugt 3 bis 7 Gew.%. Sofern Phenol mitverwandt wird, ist deren Menge meist unter 2 Gew.%.

In Stufe A erfolgt die Rückvermischung durch Rückführen eines Teils der Produktlösung mit einer Menge von 10 bis 60 Gew.-% der Produktlösung. Bevor die rückzuführende Menge erneut in die Dünnschichtverdampfung eintritt, kann man ihr noch gewünschtenfalls Harnstofflösung zumischen. Diese Harnstofflösung für Stufe A ist nicht zu verwechseln mit der Harnstofflösung, welche der Produktlösung in Stufe B unmittelbar vor der Entspannungsverdampfung zugeführt wird. Wenn die Kondensatlösung in Stufe A am Eingang in den Verdampfer einen pH von beispielsweise 6,5 aufweist, steigt dieser im Verdampfer auf einen Wert von etwa 6,8.

Besonders geeignete Verdampfer sind sog. Sambay-Verdampfer oder Fallfilmverdampfer. Diese Verdampfer weisen einen nur geringen Hold-up auf und besitzen eine sog. Pfropfenströmungscharakteristik.

In den Zeichnungen sind vorteilhafte Ausführungsformen der Erfindung weiter erläutert. Hierbei bedeuten:

Figur 1    eine schematische Darstellung des erfindungsgemäßen Verfahrens unter Verwendung eines Fallfilmverdampfers und eines Entspannungsverdampfers;

Figur 2    eine schematische Darstellung der Vorgänge an der Rohrwandung des Fallfilmverdampfers gemäß Figur 1;

Figur 3    eine schematische Darstellung der Vorgänge an einem Fallfilmverdampfer, der ohne Rückführung von Produktlösung arbeitet;

Figur 4    eine schematische Darstellung der Mengenströme beim erfindungsgemäßen Verfahren mit Rückkreisung (Beispiel) und

Figur 5    eine schematische Darstellung der Mengenströme bei demselben Verfahren, das aber ohne Rückkreisung durchgeführt wird (nicht erfindungsgemäß).

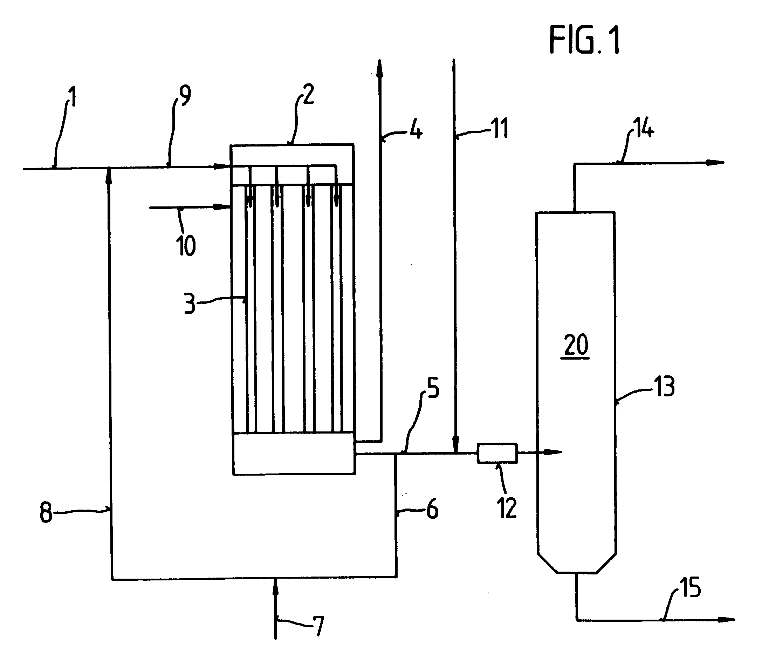

In Figur 1 ist mit 1 die Einspeisung einer Leimharz-Kondensatlösung aus einem nicht dargestellten Reaktor (gewünschtenfalls auch Reaktorkaskade) bezeichnet. Nach Vermischen mit rückgeführter Produktlösung in der Zuleitung 9 tritt die Kondensatlösung in den mit 2 bezeichneten Fallfilmverdampfer ein. Dieser ist mit Rohren 3 versehen, an deren Wandung die Kondensatlösung in Form eines Films nach unten fließt. Der Fallfilmverdampfer ist mit Dampf beheizt. Die Temperatur im Heizraum beträgt etwa 90 °C. Über die Leitung 4, welche an ein Vakuum von etwa 90 mbar angeschlossen ist, werden die Brüden abgezogen. Diese werden in üblicher Weise weiterverarbeitet. Falls die Eindampfungsanlage aus mehreren hintereinandergeschalteten Stufen besteht, wird dieser als Brüden bezeichnete Dampf geteilt. Ein Teil wird zur Stufe 1 zurückgeführt, mit Frischdampf gemischt und zur Beheizung der Stufe 1 verwendet. Der zweite Teil wird zur Beheizung der zweiten Stufe, die aus einem genau gleich aufgebauten Verdampfer besteht, verwendet. Die 2- oder 3-stufige Anlage ist bevorzugt. Der Einfachheit halber ist in den Abbildungen nur 1 Stufe gezeichnet. Am unteren Ende des Fallfilmverdampfers tritt Produktlösung über die Leitung 5 aus. Bei 6 wird ein Anteil der Produktlösung für die partielle Rückführung abgezweigt. Gewünschtenfalls kann über eine Zuleitung 7 eine Harnstofflösung zugesetzt werden. Über die Leitung 8 fließt rückgeführte Produktlösung und Harnstofflösung dann wieder nach Durchgang durch die Leitung 9 in den Fallfilmverdampfer ein. 10 kennzeichnet den Dampfeinlaß.

Über die Zuleitung 11 wird die Harnstofflösung in den Produktstrom eingespeist. Vor dem Eintritt in den Entspannungsverdampfer 13 mit adiabatischer Kühlung durchläuft das Gemisch aus Leimlösung und Harnstofflösung eine Mischstrecke 12. Zwischen der Harnstofflösung-Zugabe und dem Eintritt in den Entspannungsverdampfer liegt ein Zeitabstand von 0,5 bis 5 Sekunden, insbesondere von 2 bis 4 Sekunden. Über die Leitung 14 ist ein Vakuum von 20 mbar angeschlossen. Durch die Leitung 14 werden die Brüden abgezogen. Die Leimharzlösung tritt über die Leitung 15 aus. Sie hat beispielsweise einen Trockengehalt von 66,5 % und ein Verhältnis Harnstoff : Formaldehyd von 1:1,03 bis 1:1,17. Die Temperatur der Leimharzlösung beträgt beispielsweise 20°C.

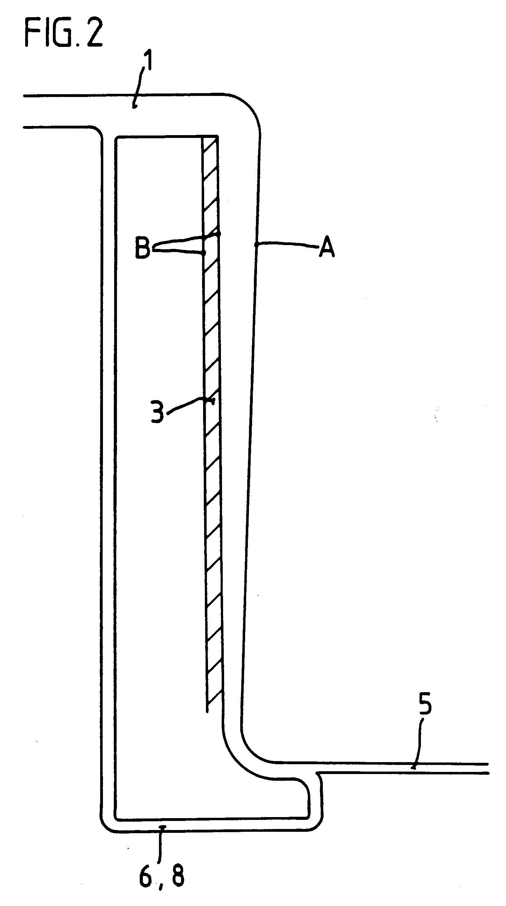

In der Figur 2 sind die Vorgänge beim Eindampfen der Kondensatlösung dargestellt. Bei 1 wird Kondensatlösung eingeleitet, welche an der Wandung 3 auf der Innenseite eines Rohres im Fallfilmverdampfer nach unten fließt. Durch zunehmende Verdampfung nimmt die Dicke des Flüssigkeitsfilms von oben nach unten graduell ab. Der Fallfilmverdampfer wird mit Dampf beheizt. An den Punkten B der Rohrwandung 3 beträgt die Temperatur ca. 90°C. Die Oberflächentemperatur des Leimfilms liegt beim Punkt A zwischen 35 und 90°C. Der Innendruck im Rohr kann beispielsweise zwischen 60 und 120 mbar liegen. Bei 5 wird eingeengte Produktlösung abgezogen. Die Rückführung erfolgt über die Leitung 6, 8.

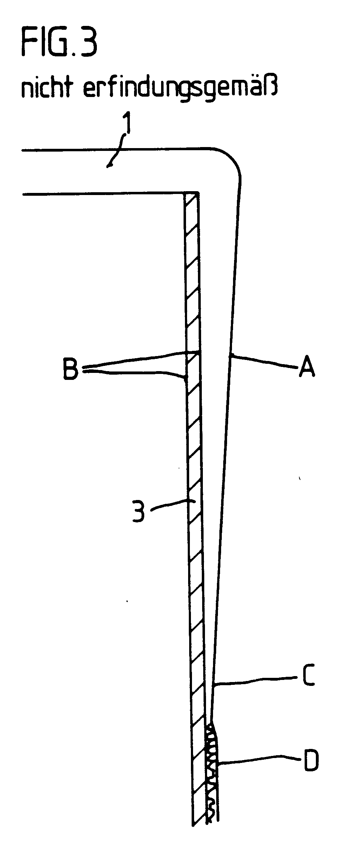

In der Figur 3 sind die Vorgänge dargestellt, welche sich bei einer Anordnung gemäß Figur 2 abspielen, wenn keine Rückführung für die Produktlösung vorgesehen ist. Bei 1 tritt die Kondensatlösung in den Fallfilmverdampfer ein und läuft unter denselben Bedingungen wie für Figur 2 genannt an der Rohrwandung nach unten. Wenn Variationen im Einlaß für die Kondensatlösung auftreten oder Temperaturführung bzw. Verweilzeit nicht genauestens gesteuert werden, erfolgt eine übermäßige Konzentrierung, so daß am Punkt C eine weitgehend eingedampfte Produktlösung vorliegt, die am Punkt D zähflüssig wird und Krusten bildet. Die am Auslauf zu geringe Schichtdicke und die damit verbundene teilweise Totaleindampfung führt zu einer drastischen Verschlechterung der Lagerfähigkeit des Produkts und erfordert eine häufige Reinigung des Verdampfers.

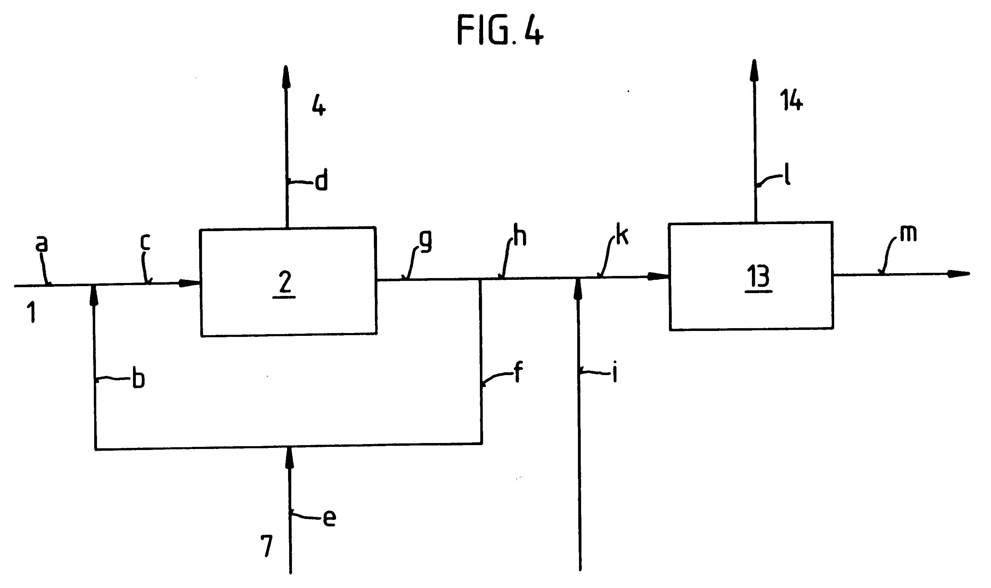

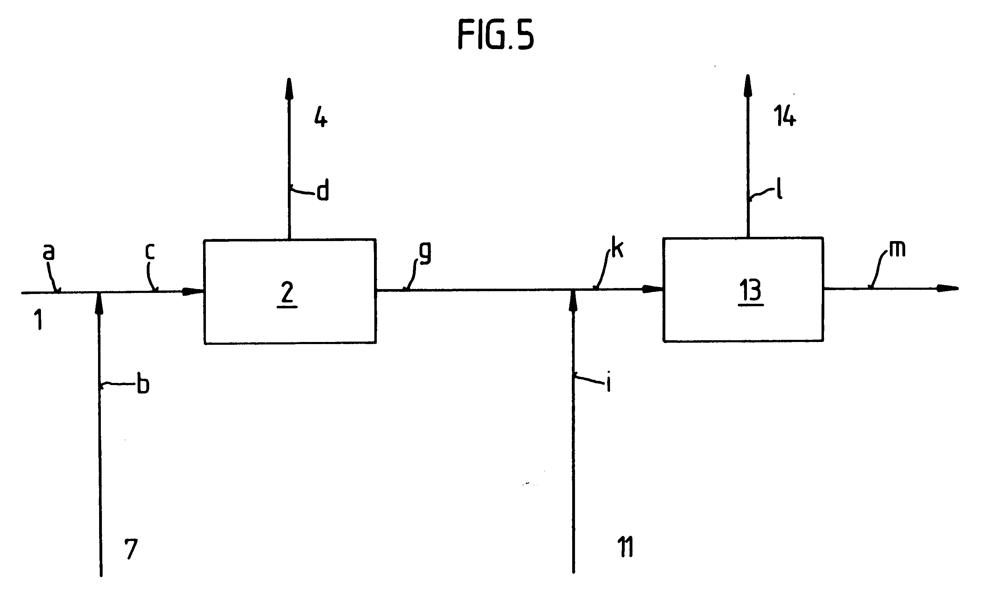

Die Figuren 4 und 5 sind schematische Darstellungen der Mengenströme beim erfindungsgemäßen Verfahren mit Rückkreisung (Figur 4) bzw. bei einem Verfahren, das ohne Rückkreisung arbeitet (Figur 5). Die zugehörigen Mengenangaben sind im Beispiel bzw. dem Vergleichsbeispiel aufgeführt.

Die Erfindung wird durch das nachfolgende Beispiel weiter erläutert.

Beispiel

1. Herstellung der Kondensatlösung (Primärlösung):

In die neutral eingestellte Lösung von 158 Teilen einer 40%igen Formaldehydlösung werden 60 Teile Harnstoff in fester Form eingetragen. Die Mischung wird 10 Minuten bei 80°C gehalten. Dabei findet die Methylolierung statt. Dann wird der pH-Wert mit 10%iger Ameisensäure auf 4-5 eingestellt. Danach steigt die Temperatur im Verlaufe einiger Minuten durch die Kondensation auf 97-100°C. Diese Temperatur wird ca. 30 Minuten gehalten, bis eine Mischung von 1 Teil Reaktionslösung und 5 Teilen Wasser beim Abkühlen bei 15°C weiß ausfällt (scharfer Umschlag). Dann wird die Reaktionsmischung mit 25%iger Natronlauge auf pH 6,6 gestellt.

Nun werden weitere 16 Teile Harnstoff zugegeben, so daß das Molverhältnis Formaldehyd zu Harnstoff im Endprodukt 1,67 beträgt. Die so erhaltene Lösung hat einen Trockengehalt von 51,6 %.

2. Eindampfung (Stufe A)

3391 Teile Primärlösung mit einem Trockengehalt von 51,6 % werden 1725 Teile Rückkreisungslösung, bestehend aus 706 Teilen HarnstoffFormaldehyd-Harz, 445 Teilen Harnstoff und 574 Teilen Wasser, zudosiert, und die resultierenden 5116 Teile Harzlösung werden auf den Fallfilmverdampfer geleitet. Dieser enthält 650 Rohre von 30 mm Innendurchmesser, die mit Dampf von 4 bar und einer Temperatur von 95°C beheizt werden. Es verdampfen 732 Teile Wasser bei einem Vakuum von durchschnittlich 0,6 bar. Die eingeengte Lösung hat eine Temperatur von 50°C; es handelt sich um 4384 Teile Lösung, enthaltend 2558 Teile Harz, 343 Teile Harnstoff und 1483 Teile Wasser, also 66,2 % Trockengehalt. Ein Teil (1/4) des Harnstoffs reagiert im Verdampfer zu Harz. 27,6 % dieser Lösung, 1210 Teile, werden abgezweigt, mit 515 Teilen einer 68%igen wäßrigen Harnstofflösung versetzt, und die resultierende Mischung wird an den Eintritt zum Verdampfer zurückgeführt.

3. Harnstoffzugabe und Entspannungsverdampfung (Stufe B)

Die zur Entspannungskühlung weitergehende Kondensatlösung wird mit 244 Teilen einer 68 %igen wäßrigen Harnstofflösung vermischt und 2,1 Sekunden danach in einen Entspannungsverdampfer geleitet. Die Harnstofflösung hat eine Temperatur von 80°C, die Leimlösung 50°C, die Mischunglösung 52°C. Die Verweilzeit von 2,1 Sekunden wird durch ein entsprechend dünnes und kurzes Rohr und Einrechnung von Mischkörpern mit diesem festgesetzt bzw. erreicht. Der Entspannungsverdampfer besteht aus einem Rohr von 200 cm Durchmesser und einer Länge von 400 cm. Er steht unter einem Vakuum von 20 mbar. Es verdampfen 62 Teile Wasser.

Die erhaltene Lösung, 3356 Teile, besteht aus 1852 Teilen Harz, 414 Teilen Harnstoff und 1090 Teilen Wasser entsprechend einem Trockengehalt von 67,5 %. Das Harz weist folgende Eigenschaften auf:

Das Molverhältnis U:F beträgt 1:1,10. Die Gelierzeit, bestimmt nach Zusatz von 10 % einer 15%igen wäßrigen Ammonchloridlösung, bei 100°C, beträgt 34 Sekunden. Die Anfangsviskosität beträgt 502 mPa.s. Die Lagerbarkeit bei 20°C, deren Ende von uns bei Erreichen einer Viskosität von 2400 mPa.s, gemessen bei 20°C, festgelegt wurde, betrug 97 Tage. Eine zweite Probe der gleichen Lösung wies eine Lagerbarkeit von 94 Tagen auf.

In der Figur 4 sind die Mengenströme beim erfindungsgemäßen Verfahren mit den Buchstaben a bis m angegeben. Der Fallfilmverdampfer (Stufe A) ist mit dem Bezugszeichen 2 versehen, der Entspannungsverdampfer (Stufe B) ist mit 13 bezeichnet. Auch die anderen Bezugszeichen besitzen dieselbe Bedeutung wie zuvor.

Mengenströme:

In der nachstehenden Aufstellung sind die an den Stellen a bis m angegebenen Mengenströme quantifiziert. Analytisch bestimmt wurden die Ströme a, d, e, i, l, m. Die anderen wurden errechnet und durch Stichproben geprüft (TG = Trockengehalt).

| Lösung | 3391 | 1725 | 5116 | 732 | 515 | 1210 |
|---|---|---|---|---|---|---|
| Harz | 1750 | 706 | 2456 | 0 | 0 | 706 |
| Wasser | 1641 | 574 | 2215 | 732 | 165 | 409 |
| Harnstoff | 0 | 445 | 445 | 0 | 350 | 94,5 |
| % TG | 51,6 | 66,7 | 56,7 | 0 | 68,0 | 66,2 |
| Mengenstrom (Fig. 4) | a | b | c | d | e | f |

| Lösung | 4384 | 3174 | 244 | 3418 | 62 | 3356 |
|---|---|---|---|---|---|---|
| Harz | 2558 | 1852 | | 1852 | 0 | 1852 |
| Wasser | 1483 | 1074 | 78 | 1152 | 62 | 1090 |
| Harnstoff | 343 | 248 | 166 | 414 | 0 | 414 |
| % TG | 66,2 | 66,2 | 68,0 | 66,3 | 0 | 67,5 |
| Mengenstrom (Fig. 4) | g | h | i | k | l | m |

Vergleichsbeispiel

Bei einem, wie im Beispiel beschrieben, jedoch ohne Rückkreisung der Produktlösung in Stufe A ausgeführten Versuch wurden 3391 Teile Primärlösung nach Zumischung von 221 Teilen einer 68 %igen wäßrigen Harnstofflösung dem Fallfilmverdampfer zugeführt. Die weiteren Schritte sind die gleichen wie in Beispiel 1 angegeben.

In Figur 5 ist dieselbe Anordnung wie in Figur 4 dargestellt, nur daß keine Rückkreisung der Produktlösung in Stufe A erfolgt. Ebenso wie in der Figur 4 sind dieselben Bezugszeichen wie bei den vorhergehenden Figuren verwendet. Die jeweiligen Mengenströme sind nachstehend zusammengestellt (TG = Trockengehalt):

| Lösung | 3391 | 3612 | 780 | 221 | |
|---|---|---|---|---|---|
| Harz | 1750 | 1750 | 0 | 0 | |
| Wasser | 1641 | 1712 | 780 | 71 | |
| Harnstoff | 0 | 150 | 0 | 150 | |
| % TG | 51,6 | 52,6 | 0 | 68 | |
| Mengenstrom (Fig. 5) | a | c | d | e | |

| Lösung | 2832 | 181 | 3013 | 62 | 2951 |
|---|---|---|---|---|---|
| Harz | 1798 | 0 | 1798 | 0 | 1798 |
| Wasser | 932 | 58 | 990 | 62 | 928 |
| Harnstoff | 102 | 123 | 225 | 0 | 225 |
| % TG | 67,1 | 68 | 67,1 | 0 | 68,6 |
| Mengenstrom (Fig. 5) | g | i | k | l | m |

Es wurde ein Leimharz erhalten mit einer Gelierzeit von 49 Sekunden bei 100° C. Die Lagerstabilität betrug bis zum Erreichen von 2400 mPa.s nur 29 Tage. Diese kurze Zeit war nicht durch die etwas höhere Feststoffkonzentration des Harzes bedingt.

1/3 des Harnstoffs reagierte im Verdampfer ab.

**Patentansprüche**

1. Verfahren zur Herstellung von lagerstabilen, flüssigen Harnstoff-Formaldehyd-Leimharzen mit einem Molverhältnis Harnstoff : Formaldehyd zwischen 1:0,8 und 1:2,1 und einem Trockengehalt von 58-75 Gew.%, bezogen auf das Gesamtgewicht des Leimharzes, bei dem in an sich bekannter Weise aus Formaldehyd und Harnstoff, sowie gegebenenfalls Melamin und/oder Phenol, wobei Melamin und Phenol auch in Form von Vorkondensaten mit Formaldehyd vorliegen können, eine Kondensatlösung hergestellt, gegebenenfalls unter vermindertem Druck eingeengt und gegebenenfalls mit Harnstoff versetzt wird, dadurch gekennzeichnet, daß man in einer Stufe A eine Kondensatlösung mit einem Trockengehalt von 38-55 Gew.-%, bezogen auf das Gesamtgewicht der Lösung herstellt und durch Dünnschichtverdampfung eindampft wobei man sie, gegebenenfalls unter Zusatz von wäßriger Harnstofflösung auf einen Trockengehalt von 58-75 Gew.-% bringt, und wobei man von der erhaltenen Produktlösung 10-60 Gew.-% in die Dünnschichtverdampfung rückführt, und dann in einer Stufe B eine wäßrige Harnstofflösung zur Produktlösung gibt und 0,5 bis 5 Sekunden danach eine Entspannungsverdampfung durchführt.

2. Verfahren nach Anspruch 1, dadurch gekennzeichnet, daß man in Stufe B 1,8 bis 2,5 Sekunden, nach der Zugabe der Harnstofflösung zur Produktlösung die Entspannungsverdampfung durchführt.

3. Verfahren nach Ansprüchen 1 oder 2, dadurch gekennzeichnet, daß man in Stufe A die Dünnschichtverdampfung mit Hilfe eines oder mehrerer, in Stufen hintereinandergeschalteter oder parallelgeschalteter Fallfilmverdampfer durchführt.

4. Verfahren nach Anspruch 3, dadurch gekennzeichnet, daß man bei der Dünnschichtverdampfung in zwei oder drei Stufen arbeitet und in jeder Stufe Produktlösung rückführt.

5. Verfahren nach einem der Ansprüche 2 bis 4, dadurch gekennzeichnet, daß man in Stufe A den bzw. die Fallfilmverdampfer bei einer mittleren Filmdicke von etwa 1 bis 2 mm und einer mittleren Verweilzeit zwischen 1 und 10 Minuten betreibt.

6. Verfahren nach einem der Ansprüche 1 bis 5, dadurch gekennzeichnet, daß man in Stufe A die Beheizung der Dünnschichtverdampfung mit Dampf von 2 bis 6 bar durchführt.

**7.** Verfahren nach einem der Ansprüche 1 bis 6, dadurch gekennzeichnet, daß man in Stufe A die Kondensatlösung bei einer Temperatur zwischen 48 und 100°C eindampft.

**8.** Verfahren nach einem der Ansprüche 1 bis 7, dadurch gekennzeichnet, daß man in Stufe B zwischen der Zugabestelle für die Harnstofflösung und der Entspannungsverdampfung eine Mischstrecke zur Vermischung der Kondensatlösung und Harnstofflösung vorsieht.

**9.** Verfahren nach einem der Ansprüche 1 bis 8, dadurch gekennzeichnet, daß man in Stufe B eine 60 bis 72 gew.%ige Harnstofflösung verwendet.

**10.** Verfahren nach einem der Ansprüche 1 bis 9, dadurch gekennzeichnet, daß man in Stufe A den Rückführanteil der Produktlösung vor dem erneuten Eintritt in die Dünnschichtverdampfung mit einer 60 bis 72 gew.%igen, wäßrigen Harnstofflösung versetzt.

**11.** Verfahren nach einem der Ansprüche 1 bis 10, dadurch gekennzeichnet, daß das Molverhältnis Harnstoff : Formaldehyd im resultierenden Leimharz 1:0,8 bis 1:1,3 ist.

**12.** Verfahren nach einem der Ansprüche 1 bis 10, dadurch gekennzeichnet, daß das Molverhältnis Harnstoff : Formaldehyd im resultierenden Leimharz 1:1,0 bis 1:2,1 ist.

## Claims

**1.** A process for the preparation of liquid urea/ formaldehyde resin glues having a long shelf life, a molar ratio of urea to formaldehyde of from 1 : 0.8 to 1 : 2.1 and a solids content of 58-75% by weight, based on the total weight of the resin glue, in which a condensate solution is prepared in a conventional manner from formaldehyde and urea and, if required, melamine and/or phenol, where melamine and phenol may also be in the form of precondensates with formaldehyde and, if required, is evaporated down under reduced pressure and, if necessary, urea is added, wherein, in a stage A, a condensate solution having a solids content of 38-55% by weight, based on the total weight of the solution, is prepared and is evaporated down in a thin-film evaporator, said solution being brought to a solids content of 58-75% by weight, if necessary with the addition of an aqueous urea solution, and 10-60% by weight of the resulting product solution being recycled to the thin-film evaporator, and then, in a stage B, an aqueous urea solution is added to the product solution and flash evaporation is carried out from 0.5 to 5 seconds thereafter.

**2.** A process as claimed in claim 1, wherein, in stage B, the flash evaporation is carried out from 1.8 to 2.5 seconds after the addition of the urea solution to the product solution.

**3.** A process as claimed in claim 1 or 2, wherein, in stage A, the evaporation in the thin-film evaporator is carried out with the aid of one or more falling-film evaporators connected in stages in series or in parallel.

**4.** A process as claimed in claim 3, wherein evaporation in a thin-film evaporator is carried out in two or three stages and product solution is recycled in each stage.

**5.** A process as claimed in any of claims 2 to 4, wherein, in stage A, the falling-film evaporator or evaporators is or are operated with an average film thickness of from about 1 to 2 mm and an average residence time of from 1 to 10 minutes.

**6.** A process as claimed in any of claims 1 to 5, wherein, in stage A, heating during evaporation in the thin-film evaporator is carried out using steam at from 2 to 6 bar.

**7.** A process as claimed in any of claims 1 to 6, wherein, in stage A, the condensate solution is evaporated down at from 48 to 100°C.

**8.** A process as claimed in any of claims 1 to 7, wherein, in stage B, a mixing zone for mixing the condensate solution and the urea solution is provided between the feed point for the urea solution and the flash evaporation.

9. A process as claimed in any of claims 1 to 8, wherein, in stage B, a 60-72% strength by weight urea solution is used.

10. A process as claimed in any of claims 1 to 9, wherein, in stage A, the amount of product solution recycled is mixed with a 60-72% strength by weight, aqueous urea solution before reentering the thin-film evaporation.

11. A process as claimed in any of claims 1 to 10, wherein the molar ratio of urea to formaldehyde in the resulting resin glue is from 1 : 0.8 to 1 : 1.3.

12. A process as claimed in any of claims 1 to 10, wherein the molar ratio of urea to formaldehyde in the resulting resin glue is from 1 : 1.0 to 1 : 2.1.

**Revendications**

1. Procédé de préparation de colles de résines urée formaldéhyde liquides avec un rapport molaire urée/formaldéhyde compris entre 1:0,8 et 1:2,1 et une teneur en matière sèche de 58 à 75% en poids, calculée sur le poids total d colle de résine, dans lequel une solution de condensation est préparée éventuellement sous pression réduite, à partir de formaldéhyde et d'urée, ainsi qu'éventuellement de mélamine et/ou de phénol, la mélamine et le phénol pouvant également se présenter sous la forme de précondensats avec le formaldéhyde, est concentrée et est éventuellement mélangée à de l'urée, caractérisé en ce que, dans une étape A, on prépare une solution de condensation avec une teneur en matière sèche de 38 à 55% en poids, calculée sur le poids total de la solution et on l'évapore par évaporation à couche mince, dans laquelle on amène la solution, éventuellement additionnée d'une solution aqueuse d'urée, à une teneur en matière sèche de 58 à 75% en poids et on recycle 10 à 60% en poids de la solution de produit obtenue dans l'évaporation à couche mince, et ensuite dans une étape B on ajoute une solution aqueuse d'urée à la solution de produit et 0,5 à 5 secondes après cet ajout, on effectue une vaporisation éclair.

2. Procédé suivant la revendication 1, caractérisé en ce que dans l'étape B on effectue la vaporisation éclair 1,8 à 2,5 secondes après l'ajout de la solution d'urée à la solution de produit.

3. Procédé suivant la revendication 1 ou 2, caractérisé en ce que, dans l'étape A, on réalise l'évaporation à couche mince au moyen d'un ou de plusieurs évaporateurs à ruissellement montés par étapes l'un derrière l'autre ou en parallèle.

4. Procédé suivant la revendication 3, caractérisé en ce qu'on travaille par évaporation en deux ou trois étapes et dans chaque étape, on recycle de la solution du produit.

5. Procédé suivant l'une des revendications 2 à 4, caractérisé en ce que, dans l'étape A, on conduit l'évaporateur, respectivement les évaporateurs à ruissellement, avec une épaisseur de film moyen d'environ 1 à 2 mm et avec un temps de séjour compris entre 1 et 10 minutes.

6. Procédé suivant l'une des revendications 1 à 5, caractérisé en ce que, dans l'étape A, on effectue le chauffage de l'évaporation à couche mince au moyen de vapeur de 2 à 6 bars.

7. Procédé suivant l'une des revendications 1 à 6, caractérisé en ce que, dans l'étape A, on évapore la solution de condensation à une température comprise entre 48 et 100°C.

8. Procédé suivant l'une des revendications 1 à 7, caractérisé en ce que, dans l'étape B entre l'endroit de l'ajout pour la solution d'urée et la vaporisation éclair, on prévoit une section de mélange pour mélanger la solution de condensation avec la solution d'urée.

9. Procédé suivant l'une des revendications 1 à 8, caractérisé en ce que, dans l'étape B on utilise une solution d'urée de 60 à 72% en poids.

10. Procédé suivant l'une des revendications 1 à 9, caractérisé en ce que, dans l'étape A, on mélange la quantité à recycler de la solution de produit, avant la réadmission dans l'évaporation à couche mince, avec une solution aqueuse d'urée à 60 à 72% en poids.

11. Procédé suivant l'une des revendications 1 à 10, caractérisé en ce que le rapport molaire urée/formaldéhyde de la colle de résine obtenue est de 1:0,8 à 1:1,3.

12. Procédé suivant l'une des revendications 1 à 10, caractérisé en ce que le rapport molaire urée/formaldéhyde de la colle de résine obtenue est de 1:1,0 à 1:2,1.

EP 0 262 387 B1

## FIG.1

# FIG.2

# FIG.3
## nicht erfindungsgemäß

1

B

A

3

C

D

FIG. 4

EP 0 262 387 B1

# FIG.5

EP 0 262 387 B1